# EUROPEAN PATENT SPECIFICATION

(11) **EP 4 535 106 B1**
(45) Date of publication and mention of the grant of the patent: **24.12.2025**
(21) Application number: 24199987.9
(22) Date of filing: 12.09.2024
(51) Int. Cl.: G05B 19/418

(54) **APPARATUS FOR UPDATING AND EMPLOYING A DIGITAL TWIN-BASED MODEL AND METHOD THEREFOR**
VORRICHTUNG ZUR AKTUALISIERUNG UND VERWENDUNG EINES DIGITALEN MODELLS AUF ZWILLINGSBASIS UND VERFAHREN DAFÜR
APPAREIL DE MISE À JOUR ET D'UTILISATION D'UN MODÈLE NUMÉRIQUE À BASE DE JUMEAUX ET PROCÉDÉ ASSOCIÉ

(30) Priority: 06.10.2023 KR 20230133641
(43) Date of publication of application: 09.04.2025
(73) Proprietor: Doosan Enerbility Co., Ltd., Seongsan-gu Changwon-si, Gyeongsangnam-do 51711 (KR)
(72) Inventor: Lee, Seung Min, 51142 Changwon-si (KR); Park, Luke, 17004 Yongin-si (KR); Hwang, Beom Cheol, 16994 Yongin-si (KR)
(74) Representative: Ter Meer Steinmeister & Partner

(56) References cited:
- EP-A1- 2 336 918
- EP-A1- 4 254 085
- US-A1- 2020 042 659

## Description

The present application claims priority from Korean Patent Application No. 10-2023-0133641, filed on October 06, 2023.

### BACKGROUND

### Technical Field

The present technique relates to a technology of updating and employing a model and, more particularly, to an apparatus for updating and employing a digital twin-based model and method therefor.

### Description of the Related Art

Recently, the term digital twin has been used in daily life and various industrial fields such as ports, transportation, buildings, energy, and shipbuilding. As the digital twin is used in the process of building and operating a smart city, it is also exposed to citizens in their daily lives and appears on subway and highway billboards to reach people. The superficial form of a digital twin may be to make a virtual twin object in the virtual world for a physical object in the real world, and to make the behavior and actions of the physical object a role model for the performance of the virtual twin object, so that the real world can be simulated and mirrored in the virtual world. Digital twins have been used in part in the manufacturing field since the concept was first introduced in 2002, and have recently gained attention in several industries.

The digital twin is a technology that implements a continuous cyclical adaptation and optimization by exactly simulating real-world objects, systems, and environments within a virtual space in a software system, enabling dynamic motion characteristics and resulting changes of real objects and systems to be simulated in the software system, applying the optimal state according to the simulation results to the real system, and allowing changes in the real system to be transmitted back to the virtual system.

US 2020/042659 A1 discloses the generation of a surrogate model for a gas turbine, the surrogate model being created from e.g. a Finite Element Analysis. EP 4 254 085 A1 discloses modelling a digital twin of a gas turbine, also for operating conditions for which only limited data are available, by adapting a model based on e.g. additional training runs. EP 2 336 918 discloses that for a physics-based gas turbine engine, model estimated output parameter data are compared with the engine output parameter data to form residuals. The disparities between the physics-based engine model and engine outputs are used to modify the performance output of the engine model estimated outputs to drive the residuals to zero by producing estimated corrections.

### SUMMARY

An objective of the present technique is to provide an apparatus for updating and employing a digital twin-based model and a method therefor.

The objective is achieved by the subject-matter of the independent claim.

According to an aspect of the present invention a method for updating a model is provided. The method includes collecting by a measurement unit an inference sensor data representing a measured physical quantity of a component of a gas turbine apparatus and measured through a sensor when the gas turbine apparatus operates, deriving by an analysis unit a state data representing whether a state of the component is a normal state or an abnormal state by analyzing the inference sensor data through a reduced order model generated using first training data derived through numerical analysis, deriving by a verification unit a state vector representing the state of the component as a probability by performing inference on the inference sensor data through a verification model generated using second training data, updating by the verification unit the first training data using the state vector corresponding to the inference sensor data when the state data is different from the state vector, updating by a physical model generation unit the reduced order model using the updated first training data, and controlling, by an expression unit, the gas turbine apparatus based on the updated reduced order model.

The method further includes generating by the physical model generation unit a reduced order model, that derives the state data by analyzing the inference sensor data, using the first training data derived through numerical analysis, before the collecting of the sensor data.

The generating of the reduced order model includes generating by the physical model generation unit a virtual component that simulates the component through a three-dimensional modeling, deriving by the physical model generation unit first sensor data representing the measured physical quantity of the virtual component for each operation condition of a plurality of operation conditions of the gas turbine apparatus through numerical analysis, deriving by the physical model generation unit the state data representing the state of the component for each operation condition of the plurality of operations conditions through numerical analysis, constructing by the physical model generation unit the first training data by mapping the first sensor data and the state data for each operation condition, and generating by the physical model generation unit a reduced order model on the basis of the first training data.

The method further includes generating by a training model generation unit a verification model, which derives the state vector from the inference sensor data, using the training data obtained when the gas turbine apparatus operates, before the collecting of the inference sensor data.

The generating the verification model includes preparing by the training model generation unit the second training data that includes the second sensor data representing the measured physical quantity of the component measured through the sensor when the gas turbine apparatus operates, and a label representing the state of the component corresponding to the second sensor data, inputting by the training model generation unit the second sensor data into the verification model, deriving by the verification model the state vector by performing inference on the second sensor data, calculating by the training model generation unit a loss representing a difference between the state vector and the label, and performing by the training model generation unit an optimization that updates parameters of the verification model by minimizing the loss.

The label is a vector representing whether the state of the component is a normal state or an abnormal state, and the state vector represents a probability corresponding to each of the normal state and the abnormal state.

The preparing the training data includes continuously collecting by the training model generation unit an operation condition, the second sensor data, and an output of the gas turbine apparatus when the gas turbine apparatus actually operates, and assigning by the training model generation unit a label of a normal state when the output of the gas turbine apparatus is within a predetermined range from a predetermined standard output value of the gas turbine apparatus in response to the operation condition and the sensor data and assigning a label of an abnormal state when the output of the gas turbine apparatus deviates from the predetermined standard output value by more than the predetermined range.

The method further includes visualizing by an expression unit the measured physical quantity of the component and the state of the component and displaying the same on a screen before the deriving of the state vector and after the deriving of the state data.

The deriving of the state data representing the state of the component by analyzing the sensor data includes deriving by the reduced order model an analyzed physical quantity of the component from the inference sensor data representing the measured physical quantity of the component and deriving by the reduced order model the state data representing whether the state of the component is a normal state or an abnormal state from the analyzed physical quantity of the component.

The deriving of the state vector includes inputting by the verification unit the inference sensor data to the verification model, and deriving by the verification model the state vector representing the probability that the component is in a normal state and the probability that the component is an abnormal state by performing a plurality of operations, including applying a trained weight between two layers of a plurality of layers of the verification model.

According to another aspect of the present invention an apparatus for updating a model is provided. The apparatus includes a measurement unit that collects an inference sensor data representing a measured physical quantity of a component of a gas turbine apparatus and measured through a sensor associated with the gas turbine apparatus when the gas turbine apparatus operates, an analysis unit that derives a state data representing whether a state of the component is a normal state or an abnormal state by analyzing the inference sensor data through an reduced order model generated using first training data derived through numerical analysis, a verification unit that derives a state vector representing the state of the component as a probability by performing inference on the inference sensor data through a verification model generated using second training data and updates the first training data using the state vector corresponding to the sensor data when the state data is different from the state vector, a physical model generation unit that updates the reduced order model using the updated first training data, and an expression unit that controls the gas turbine apparatus based on the updated reduced order model.

The physical model generation unit generates an reduced order model, which derives the state data by analyzing the inference sensor data, using the first training data derived through numerical analysis.

The physical model generation unit generates a virtual component that simulates the component through a three-dimensional modeling, derives the first sensor data representing the measured physical quantity of the virtual component for each operation condition of a plurality of operation conditions of the gas turbine apparatus through numerical analysis, derives the state data representing the state of the component for each operation condition a plurality of operation conditions through numerical analysis, constructs the first training data by mapping the first sensor data and the state data for each operation condition, and generates an reduced order model on the basis of the training data.

The apparatus further includes a training model generation unit that generates a verification model, which derives the state vector from the inference sensor data, using the second training data obtained when the gas turbine apparatus operates.

The training model generation unit prepares the second training data that includes the second sensor data representing the measured physical quantity of the component measured through the sensor when the gas turbine apparatus operates and a label representing the state of the component corresponding to the second sensor data, inputs the second sensor data into the verification model, calculates a loss representing a difference between the state vector and the label when the verification model derives the state vector by performing inference on the second sensor data, and performs optimization that updates parameters of the verification model by minimizing the loss.

The label is a vector representing whether the state of the component is a normal state or an abnormal state, and the state vector represents a probability corresponding to each of the normal state and the abnormal state.

The training model generation unit continuously collects an operation condition, the second sensor data, and an output of the gas turbine apparatus when the gas turbine apparatus actually operates, and assigns a label of a normal state when the output of the gas turbine apparatus is within a predetermined range from a predetermined standard output value of the gas turbine apparatus in response to the operation condition and the sensor data, and assigns a label of an abnormal state when the output of the gas turbine apparatus deviates from the predetermined standard output value by more than the predetermined range.

The expression unit further performs visualizing the measured physical quantity of the component and the state of the component and displaying the same on a screen.

The reduced order model derives an analyzed physical quantity of the component from the inference sensor data representing the measured physical quantity of the component and derives the state data representing whether the state of the component is a normal state or an abnormal state from the analyzed physical quantity of the component.

The verification unit derives the state vector representing a probability that the component is in a normal state and a probability that the component is an abnormal state by performing a plurality of operations, including applying a trained weight between two layers of a plurality of layers of the verification model.

According to the present technique as described above, the reduced order model may be verified and updated through the verification model trained using data collected during actual operation, thereby improving the accuracy of the reduced order model and providing a more precise digital twin.

### BRIEF DESCRIPTION OF THE DRAWINGS

FIG. 1 is a view showing a configuration of a system for updating and employing a digital twin-based model.
FIG. 2 is a partially sectioned perspective view of a gas turbine apparatus according to an exemplary embodiment of the present technique.
FIG. 3A is a cross-sectional view showing a schematic structure of a gas turbine apparatus according to an exemplary embodiment of the present technique, and FIG. 3B is a perspective view illustrating a turbine rotor disk of FIG. 3A
FIG. 4 is a view explaining a configuration of an apparatus for updating and employing a digital twin-based model according to an exemplary embodiment of the present technique.
FIG. 5 is a flowchart explaining a method of generating a reduced order model using first training data according to an exemplary embodiment of the present technique.
FIG. 6 is a flowchart explaining a method of generating a verification model using second training data according to an exemplary embodiment of the present technique.
FIG. 7 is a view explaining a method for updating a digital twin-based model according to an exemplary embodiment of the present technique.
FIG. 8 is a view showing a computing device according to an exemplary embodiment of the present technique.

### DETAILED DESCRIPTION OF THE TECHNIQUE

In the following description specific exemplary embodiments will be exemplified and explained in detail.

The terms used in the present disclosure are used only to describe a specific exemplary embodiment and are not intended to limit the present technique. Singular expressions include plural expressions unless the context clearly indicates otherwise. In the present disclosure, terms such as "include" or "have" are intended to specify that there exists a feature, number, step, operation, component, part, or combination thereof described in the specification, and should be understood as not precluding the existence or additional possibility of one or more other features or numbers, steps, operations, components, components, parts, or combinations thereof.

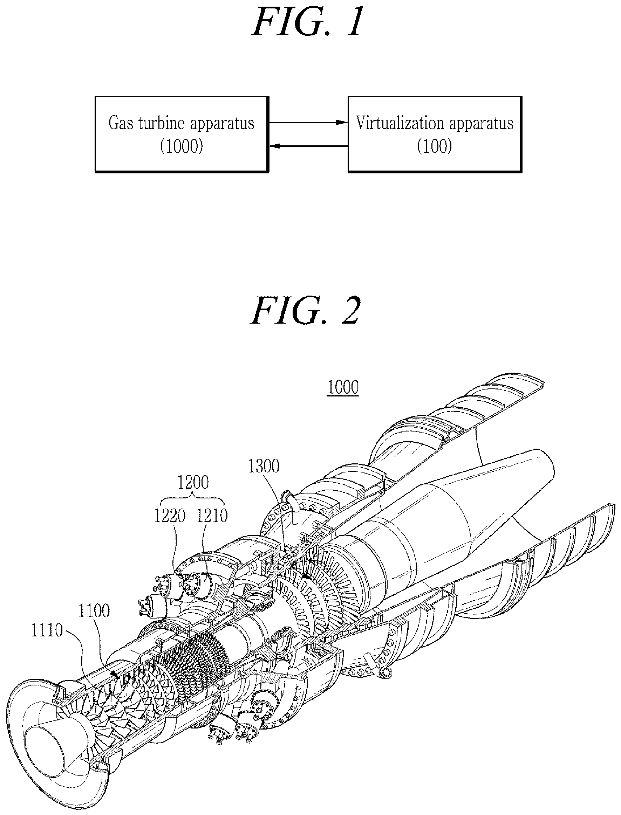

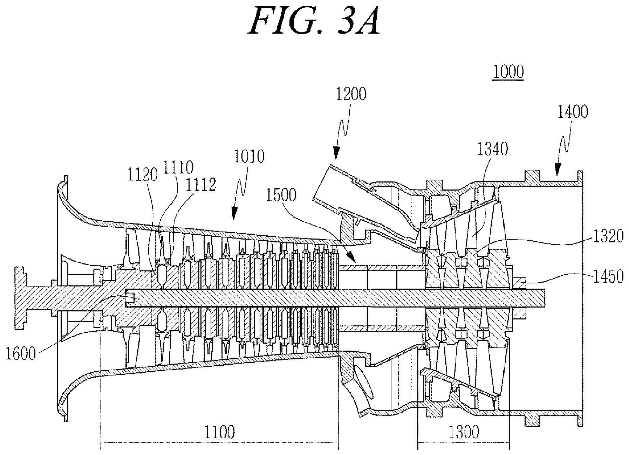

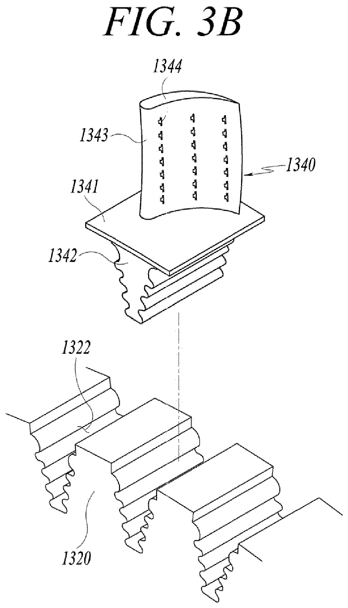

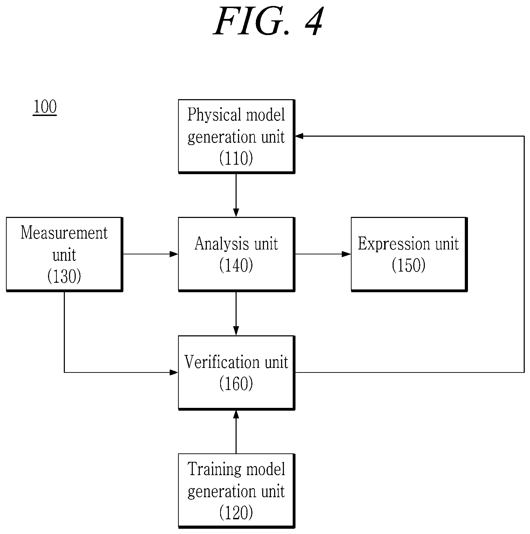

First, a system for updating a digital twin-based model according to an exemplary embodiment of the present technique will be described. FIG. 1 is a view showing a configuration of a system for updating and employing a digital twin-based model. FIG. 2 is a partially sectioned perspective view of a gas turbine apparatus, i.e. also referred to as a gas turbine or gas turbine engine, according to an exemplary embodiment of the present technique, and FIG. 3A is a cross-sectional view showing a schematic structure of a gas turbine apparatus according to an exemplary embodiment of the present technique and FIG. 3B is an exploded perspective view illustrating a turbine rotor disk of FIG. 3A. FIG. 4 is a view explaining a configuration of an apparatus for updating and employing a digital twin-based model according to an exemplary embodiment of the present technique.

Referring to FIG. 1, the system for updating and employing a digital twin-based model according to an exemplary embodiment of the present technique may include a gas turbine apparatus 1000 and a virtualization apparatus 100. Herein, the virtualization apparatus 100 may be to manage i.e. monitor and/or control the gas turbine apparatus 1000 i.e. components of the gas turbine apparatus 1000 using a digital twin.

Referring to FIGS. 2, 3A and 3B, the gas turbine apparatus 1000 may include a compressor 1100, a combustor 1200, and a turbine 1300. The compressor 1100 may be provided with a plurality of blades 1110 installed radially. The compressor 1100 may rotate the blade 1110 so that the air is compressed and moved by the rotation of the blades 1110. The size and installation angle of the blade 1110 may vary depending on the installation location. In an exemplary embodiment, the compressor 1100 may be directly or indirectly connected to the turbine 1300, and receive a portion of the power generated by the turbine 1300 and utilize the same for rotating the blade 1110.

The air compressed in the compressor 1100 may move to the combustor 1200. The combustor 1200 may include a plurality of combustion chambers 1210 arranged in an annular shape and a fuel nozzle module 1220.

As shown in FIGS. 2 and 3A, the gas turbine apparatus 1000 according to an exemplary embodiment of the present technique may be provided with a housing 1010, wherein a diffuser 1400 through which combustion gas passing through the turbine 1300 is discharged is provided at the rear side of the housing 1010. In addition, the combustor 1200 for receiving and combusting compressed air may be disposed in front of the diffuser 1400.

Explaining on the basis of the direction of air flow, the compressor 1100 may be located on the upstream side of the housing 1010, and the turbine 1300 may be disposed on the downstream side. In addition, a torque tube unit 1500 may be disposed between the compressor 1100 and the turbine 1300 as a torque transmission member that transmits a rotation torque generated in the turbine 1300 to the compressor 1100.

The compressor 1100 may be provided with a plurality of compressor rotor disks 1120, and each compressor rotor disk 1120 may be fastened by a tie rod 1600 so as not to be spaced apart in the shaft direction.

Specifically, each compressor rotor disk 1120 may be aligned with each other along the shaft direction in a state where the tie rod 1600 composing the rotation shaft passes through approximately the center. Herein, each neighboring compressor rotor disk 1120 may be disposed such that the opposite surface thereof is compressed against the tie rod 1600 so that relative rotation is impossible.

A plurality of blades 1110 may be radially coupled to the outer peripheral surface of the compressor rotor disk 1120. Each blade 1110 may be provided with a dovetail portion 1112 and may be fastened to the compressor rotor disk 1120.

A vane (not shown) fixed to and disposed in the housing may be located between each rotor disk 1120. Unlike the rotor disk, such a vane may be fixed not to rotate, and may serve to align the flow of compressed air passing through the blades of the compressor rotor disk and to guide the air to the blades of the rotor disk located on the downstream side.

A fastening method of the dovetail portion 1112 may include a tangential type and an axial type. The method may be selected according to the required structure of a commercially available gas turbine, and may have a commonly known dovetail or fir-tree shape. In some cases, the blade may be fastened to the rotor disk using a fastening device other than the shape above, for example, a fixing tool such as a key or a bolt.

The tie rod 1600 may be disposed to penetrate the center of a plurality of compressor rotor disks 1120 and turbine rotor disks 1320, and the tie rod 1600 may be composed of one or a plurality of tie rods. One side end of the tie rod 1600 may be fastened within the compressor rotor disk located on the most upstream side, and the other side end of the tie rod 1600 may be fastened by a fixing nut 1450. The shape of the tie rod 1600 may have various structures depending on the gas turbine, so it may be not necessarily limited to the shape shown in FIG. 2. That is, as shown in the drawing, a single tie rod may have a shape penetrating the center of the rotor disk, or a plurality of tie rods may have a shape of being disposed circumferentially, and a combination thereof may be possible.

Although not shown, in the compressor of the gas turbine, a vane that serves as a guide vane may be installed in order to adjust the flowing angle of the fluid flow entering the inlet of the combustor to the design flowing angle after increasing the pressure of the fluid flow, which is called a deswirler.

In the combustor 1200, the incoming compressed air may be mixed with fuel and combusted to generate a high energy, high temperature, high pressure combustion gas, and through the isobaric combustion process, the temperature of the combustion gas may reach the heat resistance limit that the combustor and turbine components can withstand.

The combustors composing the combustion system of the gas turbine may be arranged in a plurality in a housing formed in a cell shape, and may be composed of a burner including a fuel injection nozzle, a combustor liner forming a combustion chamber, and a transition piece that becomes a connection between the combustor and the turbine.

Specifically, the liner may provide a combustion space where fuel injected by the fuel nozzle is mixed and combusted with the compressed air of the compressor. Such a liner may include a flame tube that provides a combustion space where the fuel mixed with air is combusted, and a flow sleeve that forms the annular space while surrounding the flame tube. In addition, a fuel nozzle may be coupled to the front end of the liner, and an ignition plug may be coupled to the side wall.

Meanwhile, a transition piece may be connected to the rear end of the liner so that the combustion gas combusted by the ignition plug can be sent toward the turbine. The outer wall of this transition piece may be cooled by compressed air supplied from the compressor in order to prevent damage due to the high temperature of combustion gas.

For this purpose, the transition piece may be provided with holes for cooling so that air can be sprayed into the inside, and the compressed air may cool the main body inside through the holes and then may flow toward the liner.

The cooling air that cools the transition piece described above may flow in the annular space of the liner, and compressed air outside of the flow sleeve may be provided as cooling air through cooling holes provided in the flow sleeve and may collide in the outer wall of the liner.

Meanwhile, the high-temperature and high-pressure combustion gas from the combustor may be supplied to the turbine 1300. The supplied high-temperature and high-pressure combustion gas may cause the rotation torque by giving a reaction force while expanding and colliding with the rotating blade of the turbine, and the rotation torque obtained in such a way may be transmitted to the compressor through the torque tube described above, and the power in excess of the power required for driving the compressor may be used to drive the generator.

The turbine 1300 may be basically similar to the structure of the compressor. That is, the turbine 1300 may be also provided with a plurality of turbine rotor disks 1320 similar to the compressor rotor disk of the compressor. Accordingly, the turbine rotor disk 1320 may also include a plurality of turbine blades 1340 arranged radially.

The turbine blade 1340 may also be coupled to the turbine rotor disk 1320 in a dovetail or other manner. Further, a turbine vane (not shown) fixed to the housing may be provided between the blades 1340 of the turbine rotor disk 1320 and guide the flow direction of the combustion gas passing through the blade.

Referring to FIG. 3B, the turbine rotor disk 1320 may have a roughly disk-like shape, and a plurality of coupling slots 1322 may be formed at an outer peripheral surface thereof. The coupling slot 1322 may be formed to have a curved surface of a fir-tree shape.

The turbine blade 1340 may be fastened to the coupling slot 1322. In FIG. 3B, the turbine blade 1340 may have a platform portion 1341 of a flat shape around the center. The platform portion 1341 may serve to maintain a gap between the blades by contacting the platform portion 1341 of a neighboring turbine blade and the side surface thereof.

A root portion 1342 may be formed on the lower surface of the platform portion 1341. The root portion 1342 may have an axial-type shape that is inserted along the shaft direction of the rotor disk 1320 into the coupling slot 1322 of the rotor disk 1320 described above.

The root portion 1342 may have a curved portion of roughly a fir-tree shape, which is formed to correspond to the shape of the curved portion formed in the coupling slot 1322. Herein, the coupling structure of the root portion may not necessarily have a fir-tree shape, but may be formed to have a dovetail shape.

The blade portion 1343 may be formed on the upper surface of the platform portion 1341. The blade portion 1343 may be formed to have an airfoil optimized according to the specifications of the gas turbine, and may have a leading edge disposed on the upstream side and a trailing edge disposed on the downstream side on the basis of the flow direction of the combustion gas.

Herein, unlike the blade of the compressor, the blade of the turbine may come into direct contact with the combustion gas of high temperature and high pressure. The temperature of the combustion gas may be high enough to reach 1700°C, so a cooling means may be required. To this end, there may be a cooling passage that extracts compressed air from some parts of the compressor and supplies the same to the blades of the turbine.

The cooling passage may extend from the outside of the housing (an external passage), may extend through the inside of the rotor disk (an internal passage), or may use both external and internal passages. In FIG. 3B, a plurality of film cooling holes 1344 may be formed on a surface of the blade portion, and the film cooling holes 1344 may serve to supply cooling air to the surface of the blade portion 1343 while communicating with a cooling channel (not shown) formed inside the blade portion 1343.

Meanwhile, the blade portion 1343 of the turbine may be rotated by the combustion gas inside the housing, and a gap may exist between the end side of the blade portion 1343 and the inner surface of the housing so that the blade portion may rotate smoothly. However, as described above, the combustion gas may leak through the gap, so a sealing means may be required to block the same.

Both the turbine vane and the turbine blade may be in the form of airfoil and be composed of a leading edge, a trailing edge, a suction surface, and a pressure surface. The inside of the turbine vane and the turbine blade may include a complex labyrinth structure that forms the cooling system. The cooling circuit within the vane and the blade may accommodate cooling fluid, for example, air, from the compressor of the turbine engine and the fluid may pass through the end side of the vane and the blade that is coupled to the vane and blade carriers. The cooling circuit may usually include a plurality of flow passages designed to maintain all sides of the turbine vane and blade at a relatively uniform temperature, and at least some of the fluid passing through the cooling circuit may be discharged through openings of the leading edge, the trailing edge, the suction surface, and the pressure surface of the vane. A plurality of cooling channels composing the cooling circuit may be provided inside the vane and the blade, and a metering plate may be provided at the inlet side of the plurality of cooling channels. A cooling hole corresponding to the inlet of each cooling channel may be formed in the metering plate one by one. However, as the cooling fluid passes through the cooling hole of the metering plate, a strong jet may be formed, and in particular, a flow stagnation area may occur in the lower front portion of the leading edge.

The above-described structure of the gas turbine, its components, and the structure of the components is for exemplary purposes only, and not intended to limit the scope of the present technique. The present technique is also applicable to gas turbines with other structures.

Referring to FIG. 4, the virtualization apparatus 100 may be to manage i.e. monitor and/or control a gas turbine i.e. one or more or all of components of the gas turbine, using a digital twin or using digital twins. The gas turbine may be for example the gas turbine apparatus 1000, which is described with reference to FIGS. 2, 3A and 3B, a digital twin or using digital twins. Hereinafter, the gas turbine apparatus 1000 has been used as an example of a gas turbine. For example, the components of the gas turbine apparatus 1000 may be the blades 1110/1340 of the gas turbine apparatus 1000, and/or combustor of the gas turbine apparatus 1000, and so on and so forth.

The virtualization apparatus 100 may include a physical model generation unit 110, a training model generation unit 120, a measurement unit 130, an analysis unit 140, an expression unit 150, and a verification unit 160.

The physical model generation unit 110 may be to generate a reduced order model that derives the state data representing the state of the components from the measured physical quantities of the components of the gas turbine apparatus, the reduced order model being generated using first training data derived from numerical analysis.

To this end, the physical model generation unit 110 may first generate, through three-dimensional modeling, a virtual component by simulating the geometric characteristics of the component of the gas turbine apparatus. Herein, the geometric characteristics may include one or more or all of the shape, size, and volume of the component. For example, the component of the gas turbine apparatus 1110 may be the blade 1110 of the gas turbine apparatus.

In addition, the physical model generation unit 110 may derive or determine first sensor data representing one or more measured physical quantities of or for the virtual component for each operation condition of a plurality of operation conditions of the gas turbine apparatus 1000 e.g. through numerical analysis. Herein, the operation condition may include at least one of a start-up scenario (normal/fast), a cooldown time, a load condition (full/partial), and an operation time for the gas turbine. The measured physical quantity or quantities may represent the physical quantity or quantities measured through one or more sensors installed in or associated with the gas turbine apparatus 1000 with respect to or corresponding to or for the component of the gas turbine apparatus 1000. For example, the measured physical quantity may be a displacement. Accordingly, the measured physical quantity of the virtual component may be a displacement of the blade 1110 of the gas turbine apparatus 1000, measured through a displacement measurement sensor which is installed corresponding to, e.g. to face, the blade 1110 of the gas turbine apparatus 1000.

Also, the physical model generation unit 110 may derive or determine state data representing a state of the component for each operation condition e.g. through numerical analysis. At this time, the physical model generation unit 110 may derive or determine an analyzed physical quantity of or for the virtual component in response to the operation condition and the measured physical quantity e.g. through numerical analysis, and may derive or determine the state data representing whether the state of the component is a normal state or an abnormal state from the analyzed physical quantity. Analyzed physical quantity may refer to the physical quantity, that is derived or determined from the measured physical quantity, e.g. through numerical analysis or an order reduction model. For example, the analyzed physical quantity may represent one or more or all of states such as temperature, pressure, and stress. Also, the physical model generation unit 110 may construct or generate the first training data by mapping the first sensor data and the state data for each operation condition, and generate a reduced order model on the basis of the training data. The generated reduced order model may be provided to the analysis unit 140.

The training model generation unit 120 may be to generate a verification model, which is a deep learning model, through training. The generated verification model may be provided to the verification unit 160. The verification model, which derives a state vector representing the state of the component from a sensor data, is generated using second training data obtained when the gas turbine apparatus 1000 operates. The second training data may include second sensor data and a label corresponding to the second sensor data. Herein, the label may be a vector representing whether the state of the component is a normal state or an abnormal state. The training model generation unit 120 may collect the second sensor data representing the measured physical quantities of the component of the gas turbine apparatus 1000 and measured through the sensor associated with the gas turbine apparatus 1000 under the operation condition when the gas turbine apparatus 1000 actually operates and the label representing the state of the component in response to the second sensor data. When the gas turbine apparatus 1000 actually operates, the training model generation unit 120 may continuously collect the operation condition, the second sensor data, and the output of the gas turbine apparatus 1000, and may assign a label of a normal state when the output of the gas turbine apparatus 1000 is within a predefined range from a predetermined standard output value of the gas turbine apparatus 1000 in response to the operation condition and the second sensor data, and may assign a label of an abnormal state when the output of the gas turbine apparatus 1000 deviates from the predetermined standard output value of the gas turbine apparatus 1000 by more than the predetermined range.

The verification model may derive or determine a state vector through inference. The verification model may be a deep learning model and may include a plurality of layers, and each of the plurality of layers may perform a plurality of operations. Each result from the plurality of operations within a layer is weighted and then transferred to the next layer. This means that the weight is applied to the output of the current layer's operations, and this weighted result becomes the input for the operations in the next layer. In other words, the verification model performs a series of operations with weights applied between layers. Thus, inference involves executing the plurality of operations with weights applied between two layers of the plurality of layers. The plurality of layers may include at least one of a fully-connected layer, a convolutional layer, a recurrent layer, a graph layer, a pooling layer, and the like. The plurality of operations may include a convolution operation, a down sampling operation, an up-sampling operation, a pooling operation, and an operation using an activation function. Herein, the activation function may include Sigmoid, Hyperbolic tangent (tanh), Exponential Linear Unit (ELU), Rectified Linear Unit (ReLU), Leaky ReLU, Maxout, Minout, Softmax, and the like.

The measurement unit 130 may be to collect inference sensor data representing the measured physical quantity of the component of the gas turbine apparatus 1000 and measured through the sensor associated with the gas turbine apparatus 1000 when the gas turbine apparatus 1000 operates. The collected inference sensor data may be provided to the analysis unit 140 and the verification unit 160. In an exemplary embodiment of the present technique, the sensor may be installed corresponding to, e.g. to face, the component of the gas turbine apparatus 1000 in order to measure physical quantity of the gas turbine apparatus 1000.

The analysis unit 140 may analyze the inference sensor data through the reduced order model and may derive the analyzed physical quantity of the component and the state data representing the state of the component. At this time, the reduced order model may derive the analyzed physical quantity of the component from the inference sensor data representing the measured physical quantity of the component and may derive the state data representing whether the state of the component is a normal state or an abnormal state from the analyzed physical quantity of the component. The measured physical quantity may represent the physical quantity measured for the component through the sensor. For example, the measured physical quantity may be a displacement. Accordingly, the measured physical quantity of the virtual component may be the displacement of the blade 1110 of the gas turbine apparatus 1000. Analyzed physical quantity may refer to the physical quantity derived from the measured physical quantity through numerical analysis or an order reduction model. For example, the analyzed physical quantity may represent states such as temperature, pressure, and stress. The state data may represent whether the state of the component is a normal state or an abnormal state.

The expression unit 150 may be to visualize and display a virtual component, an analyzed physical quantity of the component, and a state of the component on a screen. For example, assuming that the component is a blade 1110, the shape of the blade 1110 may be visualized and displayed, and the color and shade of the shape of the blade 1110 may be changed and displayed according to the size of temperature, pressure, and stress. In addition, whether the blade 1110 is in a normal state or an abnormal state may be distinguished and displayed through a visual representation e.g. color. The expression unit 150 may control the operation of the gas turbine apparatus 1000. For example, depending on whether the state is normal or abnormal, or if the temperature, pressure, stress, or strain of the component of the gas turbine apparatus 1000 exceeds a threshold, the expression unit 150 may control the operation of the gas turbine apparatus 1000 including increasing or decreasing the gas turbine's output, stopping the gas turbine operation, or performing other necessary controls related to gas turbine operation. For example, the expression unit 150 may control the gas turbine apparatus 1000 when the reduced order model is updated.

The verification unit 160 may derive or determine a state vector representing the state of the component as a probability by performing inference on the inference sensor data through a verification model that is a trained model. That is, when the verification unit 160 inputs the inference sensor data to the verification model, the verification model may perform inference to which trained weight is applied to the input data and may derive or determine a state vector representing a probability that the component is in a normal state and a probability that the component is in an abnormal state. When the state vector is derived or determined, the verification unit 160 may compare the state data with the state vector. When the state data is different from the state vector according to the comparison, the verification unit 160 may update the first training data using the state vector corresponding to the inference sensor data. In this process, the updated first training data may be provided to the physical model generation unit 110, and the physical model generation unit 110 may update the reduced order model using the updated first training data.

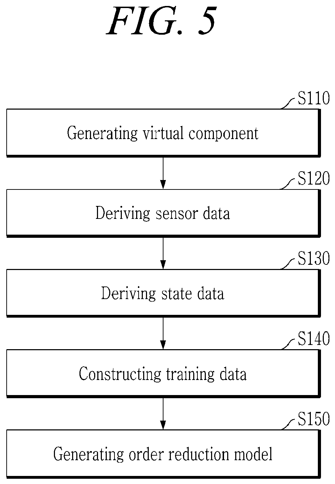

Next, a method of generating a reduced order model using the first training data will be described according to an exemplary embodiment of the present technique. FIG. 5 is a flowchart explaining a method of generating the reduced order model using the first training data according to an exemplary embodiment of the present technique.

Referring to FIG. 5, the physical model generation unit 110 may generate a plurality of virtual components by simulating geometric characteristics of the components of the gas turbine apparatus through three-dimensional modeling in the step S110. The plurality of virtual components may include a normal state component and an abnormal state component. Herein, the geometric characteristics may include the shape, size, and volume of the component. For example, the component of the gas turbine apparatus may be a blade 1110 of the gas turbine apparatus.

The physical model generation unit 110 may derive the first sensor data, representing the measured physical quantity of the virtual component for each operation condition of the gas turbine apparatus through numerical analysis for each component in both the normal state and the abnormal state in the step S120. Herein, the operation condition may include at least one of a start-up scenario (normal/fast), a cooldown time, a load condition (full/partial), and an operation time. The measured physical quantity may represent the physical quantity measured through a sensor with respect to the component. For example, the measured physical quantity may be a displacement. Accordingly, the measured physical quantity of the virtual component may be the displacement of the blade 1110 of the gas turbine apparatus.

The physical model generation unit 110 may derive the state data representing the state of the component for each operation condition of the plurality of operation conditions through numerical analysis in the step S130. At this time, the physical model generation unit 110 may derive an analyzed physical quantity of the virtual component in response to the operation condition and the measured physical quantity through numerical analysis, and may derive the state data representing whether the state of the component is a normal state or an abnormal state from the analyzed physical quantity. Analyzed physical quantity may refer to the physical quantity derived from the measured physical quantity through numerical analysis or the order reduction model. For example, the analyzed physical quantity may represent states such as temperature, pressure, and stress.

For a specific example of the step S130, the physical model generation unit 110 may derive the pressure, which is applied to the virtual blade, through flow analysis for the virtual component, may derive the temperature of the virtual blade through the heat transfer analysis for the virtual blade under the derived pressure, and may derive the stress, which is applied to the virtual blade, through the structure analysis for the virtual blade under the derived pressure and temperature. Also, the physical model generation unit 110 may derive the state data representing whether the virtual blade is in a normal state or an abnormal state through the analyzed physical quantity, such as the derived pressure, temperature, and stress.

Then, the physical model generation unit 110 may construct the first training data by mapping the first sensor data and the state data for each operation condition in the step S140. Subsequently, the physical model generation unit 110 may generate the reduced order model, which is used to derive the state data from a sensor data, on the basis of the first training data in the step S150.

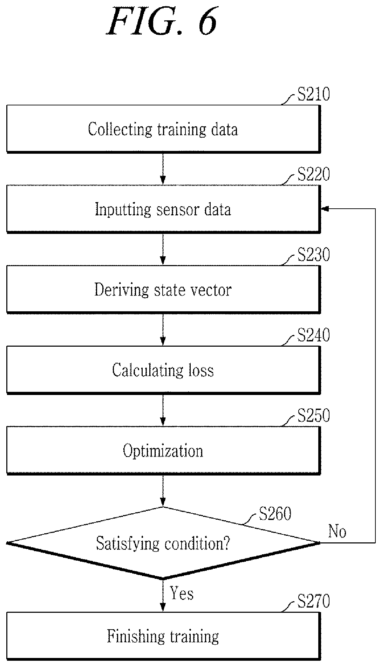

Next, a method of generating a verification model using the second training data will be described according to an exemplary embodiment of the present technique. FIG. 6 is a flowchart explaining a method of generating a verification model using the second training data according to an exemplary embodiment of the present technique.

Referring to FIG. 6, the training model generation unit 120 in the step S210 may collect a plurality of the second training data that includes the second sensor data representing the measured physical quantity of the component of the gas turbine apparatus 1000 measured through the sensor under the operation condition when the gas turbine apparatus 1000 actually operates and labels representing the state of the component corresponding to the second sensor data. Herein, the label may be a vector representing whether the state of the component is a normal state or an abnormal state. This may be expressed as a one-hot-encoding vector.

That is, the training model generation unit 120 may continuously collect the operation condition, the second sensor data, and the output of the gas turbine apparatus 1000 when the gas turbine apparatus 1000 actually operates. The training model generation unit 120 may assign a label of a normal state when the output of the gas turbine apparatus 1000 is within a predetermined range from the predetermined standard output value of the gas turbine apparatus 1000 in response to the operation condition and the second sensor data. The training model generation unit 120 may assign a label of an abnormal state when the output of the gas turbine apparatus 1000 deviates from the predetermined standard output value of the gas turbine apparatus 1000 by more than a predetermined range.

The training model generation unit 120 may input the second sensor data of the training data into the verification model in the step S220 for training.

Then, the verification model in the step S230 may derive a state vector through inference for the second sensor data to train the weights of the verification model. The state vector may represent the probability that the component is in a normal state and the probability that the component is in an abnormal state.

Accordingly, the training model generation unit 120 in the step S240 may calculate a loss representing a difference between the state vector and a label corresponding to the second sensor data inputted previously in S220, using a loss function.

The training model generation unit 120 may perform optimization that modifies the weights of the verification model in order to minimize the loss in the step S250.

Steps from S220 to S250 described above may be repeatedly performed using a plurality of different training data collected previously, and according to this repetition the weights of the verification model may be repeatedly modified. Also, this repetition may be performed until the loss becomes convergent and less than or equal to the predetermined target value. Accordingly, the training model generation unit 120 in the step S260 may determine whether the loss calculated previously in S240 becomes convergent and less than or equal to the predetermined target value and may finish the training of the verification model in the step S270 when the loss is convergent and less than or equal to the predetermined target value.

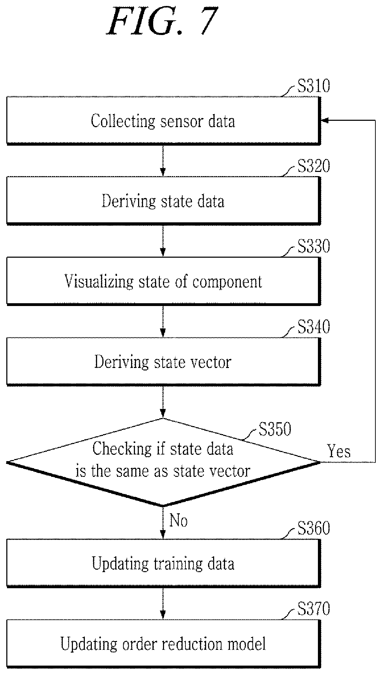

Next, a method for updating a digital twin-based model will be described according to an exemplary embodiment of the present technique. FIG. 7 is a view explaining a method for updating a digital twin-based model according to an exemplary embodiment of the present technique.

In the step S310, the measurement unit 130 may collect the inference sensor data representing the measured physical quantity of the components of the gas turbine apparatus 1000 measured through the sensor installed to or associated with the gas turbine apparatus 1000 when the gas turbine apparatus 1000 operates.

In the step S320, the analysis unit 140 may analyze the inference sensor data through the reduced order model generated previously (see FIG. 5) and may derive the analyzed physical quantity of the component and the state data representing the state of the component. At this time, the reduced order model may derive the analyzed physical quantity of the component from the sensor data representing the measured physical quantity of the component, and then derive the state data representing whether the state of the component is a normal state or an abnormal state from the analyzed physical quantity of the component.

The measured physical quantity may represent the physical quantity measured through the sensor for the component. For example, the measured physical quantity may be a displacement. According to this, the measured physical quantity of the virtual component may be the displacement of the blade 1110 of the gas turbine apparatus. Analyzed physical quantity may refer to the physical quantity derived from the measured physical quantity through numerical analysis or the order reduction model. For example, the analyzed physical quantity may represent states such as temperature, pressure, stress, and the like. In particular, the state data may represent whether the state of the component is a normal state or an abnormal state.

In the step S330, the expression unit 150 may visualize the virtual component, the analyzed physical quantity of the component, and state of the component and then may display the same on the screen. For example, assuming that the component is a blade 1110, the shape of the blade 1110 may be visualized and displayed, and the color and shade of the shape of the blade 1110 may be changed and displayed according to the size of temperature, pressure, and stress. In addition, it may be possible to distinguish and display whether the blade 1110 is in a normal state or an abnormal state through color. In the meantime, depending on whether the state is normal or abnormal, or if the temperature, pressure, stress, or strain of the component of the gas turbine apparatus 1000 exceeds a threshold, step S330 may include transmitting controlling signal that controls the operation of the gas turbine apparatus 1000, including increasing or decreasing the gas turbine's output, stopping the gas turbine operation, or performing other necessary controls related to gas turbine operation. For example, the controlling signal may be transmitted to the gas turbine apparatus 1000 when the reduced order model is updated.

Meanwhile, the verification unit 160 in the step S340 may derive a state vector representing the state of the component as a probability by performing inference on the inference sensor data through the verification model generated previously (see FIG. 6). That is, when the verification unit 160 inputs the inference sensor data to the verification model, the verification model may perform inference on the inference sensor data and then may derive the state vector representing the probability that the component is in a normal state and the probability that the component is in an abnormal state. In other words, the verification model may perform a plurality of operations where the trained weight is applied between each consecutive pair of a plurality of layers for the inference sensor data and may derive the state vector representing the probability that the component is in a normal state and the probability that the component is in an abnormal state.

Next, the verification unit 160 in the step S350 may compare the state data and the state vector. The state data and the state vector may match or mismatch because reduced order model is generated using the first training data limited according to the design specifications of the gas turbine apparatus 1000. In this case, since the state of the gas turbine apparatus 1000 may be outside of the design range, the state data and the state vector may be different with each other. For example, the state data indicates the normal state while the state vector indicates the abnormal state. Accordingly, a verification for an output of the reduced order model may be required through the verification model which is a trained model.

When the state data and the state vector are the same as a result of the comparison in the step S350, steps S310 to S340 described above may be repeated. On the other hand, when the state data and the state vector are different as a result of the comparison in the step S350, the process may proceed to the step S360.

In the step S360, the verification unit 160 may update the first training data using the state vector corresponding to the inference sensor data. Then, in the step S370, the physical model generation unit 110 may update the reduced order model using the updated first training data.

According to the present technique as described above, the reduced order model may be verified and updated through the verification model trained using data collected during actual operation, thereby improving the accuracy of the reduced order model and providing a more precise digital twin.

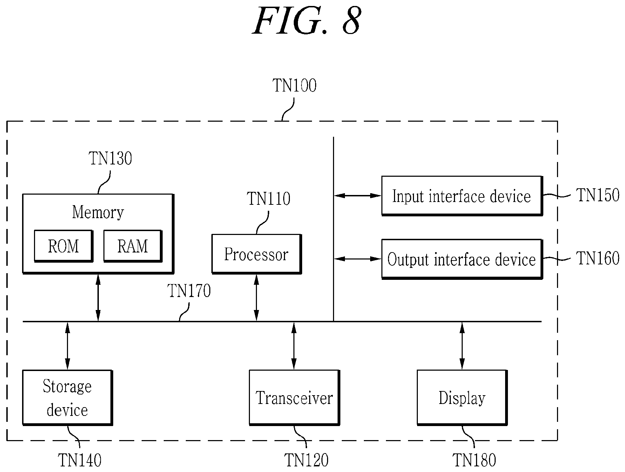

FIG. 8 is a view showing a computing device according to an exemplary embodiment of the present technique. A computing device TN100 of FIG. 8 may be the apparatus (e.g., a virtualization apparatus 100 or the like) described in the present specification.

In the exemplary embodiment of FIG. 8, the computing device TN100 may include at least one processor TN110, a transceiver TN120, and a memory TN130. In addition, the computing device TN100 may further include a storage device TN140, an input interface device TN150, an output interface device TN160, and the like. The components included in the computing device TN100 may be connected by a bus TN170 to communicate with each other.

The processor TN110 may execute a program command stored in at least one of the memory TN130 and the storage device TN140. The processor TN110 may refer to a central processing unit (CPU), a graphics processing unit (GPU), or a dedicated processor in which methods according to exemplary embodiments of the present technique are performed. The processor TN110 may be configured to implement procedures, functions, and methods described in relation to an exemplary embodiment of the present technique. The processor TN110 may control each component of the computing device TN100.

Each of the memory TN130 and the storage device TN140 may store various information in relation to the operation of the processor TN110. Each of the memory TN130 and the storage device TN140 may be composed of at least one of a volatile storage medium and a nonvolatile storage medium. For example, the memory TN130 may be composed of at least one of a read only memory (ROM) and a random access memory (RAM).

The transceiver TN120 may transmit or receive wired signals or wireless signals. The transceiver TN120 may be connected to a network to perform communication. For example, the transceiver TN120 may receive and transmit data from and to the gas turbine apparatus 1000. The data may include sensor data generated from the sensors installed on or associated with the gas turbine apparatus 1000 and controlling signals that control the operation of the gas turbine apparatus 1000. The display TN180 may display text and graphical information, such as operational status, performance metrics, and system alerts.

Meanwhile, the various methods described above according to an exemplary embodiment of the present technique may be implemented in the form of a program readable through various computer means and may be recorded on a computer-readable recording medium. Herein, the recording medium may include a program command, a data file, a data structure, and the like, alone or in combination thereof. The program commands recorded on the recording medium may be designed and configured specifically for the present technique or may be known and usable by those skilled in the art in computer software. For example, the recording medium may include a magnetic medium such as a hard disk, a floppy disk, and a magnetic tape, an optical medium such as a CD-ROM, and a DVD, a magnetic-optical medium such as a floptical disk, and a hardware device, such as ROM, RAM, and a flash memory, which is specifically configured to store and execute program commands. Examples of program commands may include not only machine language such as those created by a compiler but also an advanced language Wire that may be executed by a computer using an interpreter. Such hardware devices may be configured to operate as one or more software modules in order to perform the operations of the present technique, and vice versa.

## Claims

1. A method for updating a model, the method comprising:
collecting, by a measurement unit (130), an inference sensor data representing a measured physical quantity of a component of a gas turbine apparatus (100) and measured through a sensor associated with the gas turbine apparatus (100) when the gas turbine apparatus operates;
deriving, by an analysis unit (140), a state data representing whether a state of the component is a normal state or an abnormal state by analyzing the inference sensor data through a reduced order model generated using first training data derived through numerical analysis;
deriving, by a verification unit (160), a state vector representing the state of the component as a probability by performing inference on the inference sensor data through a verification model generated using second training data;
updating, by the verification unit (160), the first training data using the state vector corresponding to the inference sensor data when the state data is different from the state vector;
updating, by a physical model generation unit (110), the reduced order model using the updated first training data; and
controlling, by an expression unit (150), the gas turbine apparatus based on the updated reduced order model.

2. The method of claim 1, further comprising:
generating, by the physical model generation unit (110), the reduced order model, which derives the state data by analyzing the inference sensor data, using the first training data derived through the numerical analysis before the collecting of the inference sensor data.

3. The method of claim 2, wherein the generating of the reduced order model comprises:
generating (S110), by the physical model generation unit (110), a virtual component that simulates the component through a three-dimensional modeling;
deriving (S120), by the physical model generation unit (110), first sensor data representing the measured physical quantity of the virtual component for each operation condition of a plurality of operation conditions of the gas turbine apparatus through the numerical analysis;
deriving (S130), by the physical model generation unit (110), the state data representing the state of the component for each operation condition of the plurality of operation conditions through the numerical analysis;
constructing (S140), by the physical model generation unit (110), the first training data by mapping the first sensor data and the state data for each operation condition of the plurality of operation conditions; and
generating (S150), by the physical model generation unit (110), the reduced order model on the basis of the first training data.

4. The method of any one of the preceding claims, further comprising:
generating, by a training model generation unit (120), the verification model, which derives the state vector from the inference sensor data, using the second training data obtained when the gas turbine apparatus operates, before the collecting of the inference sensor data.

5. The method of claim 4, wherein the generating of the verification model comprises:
preparing, by the training model generation unit (120), the second training data that includes the second sensor data representing the measured physical quantity of the component measured through the sensor when the gas turbine apparatus operates and a label representing the state of the component corresponding to the second sensor data;
inputting, by the training model generation unit (120), the second sensor data into the verification model;
deriving, by the verification model, the state vector by performing inference on the second sensor data;
calculating, by the training model generation unit (120), a loss representing a difference between the state vector and the label; and
performing, by the training model generation unit (120), an optimization that updates parameters of the verification model by minimizing the loss.

6. The method of claim 5, wherein the label is a vector representing whether the state of the component is the normal state or the abnormal state, and the state vector represents the probability corresponding to each of the normal state and the abnormal state.

7. The method of claim 5 or 6, wherein the preparing of the training data comprises:
continuously collecting, by the training model generation unit, an operation condition, the second sensor data, and an output of the gas turbine apparatus when the gas turbine apparatus actually operates; and
assigning, by the training model generation unit, the label of the normal state when the output of the gas turbine apparatus is within a predetermined range from a predetermined standard output value of the gas turbine apparatus in response to the operation condition and the second sensor data, and assigning the label of the abnormal state when the output of the gas turbine apparatus deviates from the predetermined standard output value by more than the predetermined range.

8. The method of any one of the preceding claims, further comprising:
visualizing, by the expression unit (150), the measured physical quantity of the component and the state of the component, and displaying the visualized measured physical quantity of the component and the visualized state of the component on a screen before the deriving of the state vector and after the deriving of the state data.

9. The method of any one of the preceding claims, wherein the deriving of the state data comprises:
deriving, by the reduced order model, an analyzed physical quantity of the component from the inference sensor data representing the measured physical quantity of the component; and
deriving, by the reduced order model, the state data representing whether the state of the component is the normal state or the abnormal state from the analyzed physical quantity of the component.

10. The method of any one of the preceding claims, wherein the deriving of the state vector comprises:
inputting, by the verification unit (160), the inference sensor data to the verification model; and
deriving, by the verification model, the state vector representing the probability that the component is in the normal state and the probability that the component is the abnormal state by performing a plurality of operations, including applying a trained weight between two layers of a plurality of layers of the verification model.

11. An apparatus for updating a model, the apparatus comprising:
a measurement unit (130) configured to collect an inference sensor data representing a measured physical quantity of a component of a gas turbine apparatus and measured through a sensor associated with the gas turbine apparatus when the gas turbine apparatus operates;
an analysis unit (140) configured to derive a state data representing whether a state of the component is a normal state or an abnormal state by analyzing the inference sensor data through a reduced order model generated using first training data derived through numerical analysis;
a verification unit (160) configured to derive a state vector representing the state of the component as a probability by performing inference on the inference sensor data through a verification model generated using second training data, and to update the first training data using the state vector corresponding to the inference sensor data when the state data is different from the state vector;
a physical model generation unit (110) configured to update the reduced order model using the updated first training data; and
an expression unit (150) configured to control the gas turbine apparatus based on the updated reduced order model.

12. The apparatus of claim 11, wherein the physical model generation unit (110) is configured to generate the reduced order model, which derives the state data by analyzing the inference sensor data, using the first training data derived through the numerical analysis.

13. The apparatus of claim 12, wherein the physical model generation unit (110) is configured to:
generate a virtual component that simulates the component through a three-dimensional modeling,
derive first sensor data representing the measured physical quantity of the virtual component for each operation condition of a plurality of operation conditions of the gas turbine apparatus through the numerical analysis,
derive the state data representing the state of the component for each operation condition of the plurality of operation conditions through the numerical analysis,
construct the first training data by mapping the first sensor data and the state data for each operation condition of the plurality of operation conditions, and
generate the reduced order model on the basis of the first training data.

14. The apparatus of any one of claims 11 to 13, further comprising:
a training model generation unit configured to generate the verification model, which derives the state vector from the inference sensor data, using the second training data obtained when the gas turbine apparatus operates.

15. The apparatus of claim 14, wherein the training model generation unit is configured to:
prepare the second training data that includes the second sensor data representing the measured physical quantity of the component measured through the sensor when the gas turbine apparatus operates and a label representing the state of the component corresponding to the second sensor data,
input the second sensor data into the verification model,
calculate a loss representing a difference between the state vector and the label when the verification model derives the state vector by performing inference on the second sensor data, and
perform an optimization that updates parameters of the verification model by minimizing the loss.

## Patentansprüche

1. Verfahren zum Aktualisieren eines Modells, wobei das Verfahren Folgendes umfasst:
Erfassen von Inferenzsensordaten, die eine gemessene physikalische Größe einer Komponente einer Gasturbinenvorrichtung (100) darstellen und durch einen Sensor, der der Gasturbinenvorrichtung (100) zugeordnet ist, gemessen werden, wenn die Gasturbinenvorrichtung arbeitet, durch eine Messeinheit (130);
Ableiten von Zustandsdaten, die darstellen, ob ein Zustand der Komponente ein regulärer Zustand oder ein anomaler Zustand ist, durch Analysieren der Inferenzsensordaten durch ein Modell mit reduzierter Ordnung, das unter Verwendung erster Trainingsdaten erzeugt wird, die durch numerische Analyse abgeleitet werden, durch eine Analyseeinheit (140);
Ableiten eines Zustandsvektors, der den Zustand der Komponente als eine Wahrscheinlichkeit darstellt, durch Durchführen von Inferenz auf den Inferenzsensordaten durch ein Verifizierungsmodell, das unter Verwendung zweiter Trainingsdaten erzeugt wird, durch eine Verifizierungseinheit (160);
Aktualisieren der ersten Trainingsdaten unter Verwendung des Zustandsvektors, der den Inferenzsensordaten entspricht, durch die Verifizierungseinheit (160), wenn sich die Zustandsdaten vom Zustandsvektor unterscheiden;
Aktualisieren des Modells mit reduzierter Ordnung unter Verwendung der aktualisierten ersten Trainingsdaten durch eine Einheit (110) zur Erzeugung eines physikalischen Modells; und
Steuern der Gasturbinenvorrichtung auf der Grundlage des aktualisierten Modells mit reduzierter Ordnung durch eine Ausdruckseinheit (150).

2. Verfahren nach Anspruch 1, das ferner Folgendes umfasst:
Erzeugen des Modells mit reduzierter Ordnung, das die Zustandsdaten durch Analysieren der Inferenzsensordaten ableitet, unter Verwendung der ersten Trainingsdaten, die vor dem Erfassen der Inferenzsensordaten durch die numerische Analyse abgeleitet worden sind, durch die Einheit (110) zur Erzeugung eines physikalischen Modells.

3. Verfahren nach Anspruch 2, wobei das Erzeugen des Modells mit reduzierter Ordnung Folgendes umfasst:
Erzeugen (S110) einer virtuellen Komponente, die die Komponente simuliert, durch eine dreidimensionale Modellierung durch die Einheit (110) zur Erzeugung eines physikalischen Modells;
Ableiten (S120) erster Sensordaten, die die gemessene physikalische Größe der virtuellen Komponente darstellen, für jeden Betriebszustand von mehreren Betriebszuständen der Gasturbinenvorrichtung durch die numerische Analyse durch die Einheit (110) zur Erzeugung eines physikalischen Modells;
Ableiten (S130) der Zustandsdaten, die den Zustand der Komponente darstellen, für jeden Betriebszustand der mehreren Betriebszustände durch die numerische Analyse durch die Einheit (110) zur Erzeugung eines physikalischen Modells;
Konstruieren (S140) der ersten Trainingsdaten durch Zuordnen der ersten Sensordaten und der Zustandsdaten für jeden Betriebszustand der mehreren Betriebszustände durch die Einheit (110) zur Erzeugung eines physikalischen Modells; und
Erzeugen (S150) des Modells mit reduzierter Ordnung auf der Grundlage der ersten Trainingsdaten durch die Einheit (110) zur Erzeugung eines physikalischen Modells.

4. Verfahren nach einem der vorhergehenden Ansprüche, das ferner Folgendes umfasst:
Erzeugen des Verifizierungsmodells, das den Zustandsvektor aus den Inferenzsensordaten ableitet, unter Verwendung der zweiten Trainingsdaten, die vor dem Erfassen der Inferenzsensordaten erhalten werden, wenn die Gasturbinenvorrichtung arbeitet, durch eine Trainingsmodell-Erzeugungseinheit (120).

5. Verfahren nach Anspruch 4, wobei das Erzeugen des Verifizierungsmodells Folgendes umfasst:
Vorbereiten der zweiten Trainingsdaten, die die zweiten Sensordaten, die die gemessene physikalische Größe der Komponente darstellen, die durch den Sensor gemessen werden, wenn die Gasturbinenvorrichtung arbeitet, und einen Kennsatz, der den Zustand der Komponente darstellt, der den zweiten Sensordaten entspricht, enthalten, durch die Trainingsmodell-Erzeugungseinheit (120);
Eingeben der zweiten Sensordaten in das Verifizierungsmodell durch die Trainingsmodell-Erzeugungseinheit (120);
Ableiten des Zustandsvektors durch Durchführen von Inferenz auf den zweiten Sensordaten durch das Verifizierungsmodell;
Berechnen eines Verlusts, der eine Differenz zwischen dem Zustandsvektor und dem Kennsatz darstellt, durch die Trainingsmodell-Erzeugungseinheit (120); und
Durchführen einer Optimierung, die durch Minimieren des Verlusts Parameter des Verifizierungsmodells aktualisiert, durch die Trainingsmodell-Erzeugungseinheit (120).

6. Verfahren nach Anspruch 5, wobei der Kennsatz ein Vektor ist, der darstellt, ob der Zustand der Komponente der reguläre Zustand oder der anomale Zustand ist, und der Zustandsvektor die Wahrscheinlichkeit, die jeweils dem regulären Zustand und dem anomalen Zustand entspricht, darstellt.

7. Verfahren nach Anspruch 5 oder 6, wobei das Vorbereiten der Trainingsdaten Folgendes umfasst:
ununterbrochenes Erfassen eines Betriebszustands, der zweiten Sensordaten und eines Ausgangs der Gasturbinenvorrichtung, wenn die Gasturbinenvorrichtung tatsächlich arbeitet, durch die Trainingsmodell-Erzeugungseinheit; und
Zuweisen des Kennsatzes des regulären Zustands, wenn der Ausgang der Gasturbinenvorrichtung innerhalb eines vorgegebenen Bereichs von einem vorgegebenen Normausgangswert der Gasturbinenvorrichtung liegt, als Antwort auf den Betriebszustand und die zweiten Sensordaten und Zuweisen des Kennsatzes des anomalen Zustands, wenn der Ausgang der Gasturbinenvorrichtung um mehr als den vorgegebenen Bereich von dem vorgegebenen Normausgangswert abweicht.

8. Verfahren nach einem der vorhergehenden Ansprüche, das ferner Folgendes umfasst:
Visualisieren der gemessenen physikalischen Größe der Komponente und des Zustands der Komponente und Anzeigen der visualisierten gemessenen physikalischen Größe der Komponente und des visualisierten Zustands der Komponente auf einem Bildschirm vor dem Ableiten des Zustandsvektors und nach dem Ableiten der Zustandsdaten durch die Ausdruckseinheit (150).

9. Verfahren nach einem der vorhergehenden Ansprüche, wobei das Ableiten der Zustandsdaten Folgendes umfasst:
Ableiten einer analysierten physikalischen Größe der Komponente aus den Inferenzsensordaten, die die gemessene physikalische Größe der Komponente darstellen, durch das Modell mit reduzierter Ordnung; und
Ableiten der Zustandsdaten, die darstellen, ob der Zustand der Komponente der reguläre Zustand oder der anomale Zustand ist, aus der analysierten physikalischen Größe der Komponente durch das Modell mit reduzierter Ordnung.

10. Verfahren nach einem der vorhergehenden Ansprüche, wobei das Ableiten des Zustandsvektors Folgendes umfasst:
Eingeben der Inferenzsensordaten in das Verifizierungsmodell durch die Verifizierungseinheit (160); und
Ableiten des Zustandsvektors, der die Wahrscheinlichkeit, dass sich die Komponente im regulären Zustand befindet, und die Wahrscheinlichkeit, dass sich die Komponente im anomalen Zustand befindet, darstellt, durch Durchführen mehrerer Vorgänge, die das Anwenden einer trainierten Gewichtung zwischen zwei Schichten von mehreren Schichten des Verifizierungsmodells enthalten, durch das Verifizierungsmodell.

11. Vorrichtung zum Aktualisieren eines Modells, wobei die Vorrichtung Folgendes umfasst:
eine Messeinheit (130), die konfiguriert ist, Inferenzsensordaten zu erfassen, die eine gemessene physikalische Größe einer Komponente einer Gasturbinenvorrichtung darstellen und durch einen Sensor, der der Gasturbinenvorrichtung zugeordnet ist, gemessen werden, wenn die Gasturbinenvorrichtung arbeitet;
eine Analyseeinheit (140), die konfiguriert ist, Zustandsdaten, die darstellen, ob ein Zustand der Komponente ein regulärer Zustand oder ein anomaler Zustand ist, durch Analysieren der Inferenzsensordaten durch ein Modell mit reduzierter Ordnung, das unter Verwendung erster Trainingsdaten erzeugt wird, die durch numerische Analyse abgeleitet werden, abzuleiten;
eine Verifizierungseinheit (160), die konfiguriert ist, einen Zustandsvektor, der den Zustand der Komponente als eine Wahrscheinlichkeit darstellt, durch Durchführen von Inferenz auf den Inferenzsensordaten durch ein Verifizierungsmodell, das unter Verwendung zweiter Trainingsdaten erzeugt wird, abzuleiten und die ersten Trainingsdaten unter Verwendung des Zustandsvektors, der den Inferenzsensordaten entspricht, zu aktualisieren, wenn sich die Zustandsdaten vom Zustandsvektor unterscheiden;
eine Einheit (110) zur Erzeugung eines physikalischen Modells, die konfiguriert ist, das Modell mit reduzierter Ordnung unter Verwendung der aktualisierten ersten Trainingsdaten zu aktualisieren; und
eine Ausdruckseinheit (150), die konfiguriert ist, die Gasturbinenvorrichtung auf der Grundlage des aktualisierten Modells mit reduzierter Ordnung zu steuern.

12. Vorrichtung nach Anspruch 11, wobei die Einheit (110) zur Erzeugung eines physikalischen Modells konfiguriert ist, das Modell mit reduzierter Ordnung, das die Zustandsdaten durch Analysieren der Inferenzsensordaten ableitet, unter Verwendung der ersten Trainingsdaten, die durch die numerische Analyse abgeleitet worden sind, zu erzeugen.

13. Vorrichtung nach Anspruch 12, wobei die Einheit (110) zur Erzeugung eines physikalischen Modells konfiguriert ist zum:
Erzeugen einer virtuellen Komponente, die die Komponente simuliert, durch eine dreidimensionale Modellierung;
Ableiten erster Sensordaten, die die gemessene physikalische Größe der virtuellen Komponente darstellen, für jeden Betriebszustand von mehreren Betriebszuständen der Gasturbinenvorrichtung durch die numerische Analyse;
Ableiten der Zustandsdaten, die den Zustand der Komponente darstellen, für jeden Betriebszustand der mehreren Betriebszustände durch die numerische Analyse;
Konstruieren der ersten Trainingsdaten durch Zuordnen der ersten Sensordaten und der Zustandsdaten für jeden Betriebszustand der mehreren Betriebszustände; und
Erzeugen des Modells mit reduzierter Ordnung auf der Grundlage der ersten Trainingsdaten.

14. Vorrichtung nach einem der Ansprüche 11 bis 13, die ferner Folgendes umfasst:
eine Trainingsmodell-Erzeugungseinheit, die konfiguriert ist, das Verifizierungsmodell, das den Zustandsvektor aus den Inferenzsensordaten ableitet, unter Verwendung der zweiten Trainingsdaten, die erhalten werden, wenn die Gasturbinenvorrichtung arbeitet, zu erzeugen.

15. Vorrichtung nach Anspruch 14, wobei die Trainingsmodell-Erzeugungseinheit konfiguriert ist zum:
Vorbereiten der zweiten Trainingsdaten, die die zweiten Sensordaten, die die gemessene physikalische Größe der Komponente darstellen, die durch den Sensor gemessen werden, wenn die Gasturbinenvorrichtung arbeitet, und einen Kennsatz, der den Zustand der Komponente darstellt, der den zweiten Sensordaten entspricht, enthalten;
Eingeben der zweiten Sensordaten in das Verifizierungsmodell;
Berechnen eines Verlusts, der eine Differenz zwischen dem Zustandsvektor und dem Kennsatz darstellt, wenn das Verifizierungsmodell den Zustandsvektor durch Durchführen von Inferenz auf den zweiten Sensordaten ableitet; und
Durchführen einer Optimierung, die durch Minimieren des Verlusts Parameter des Verifizierungsmodells aktualisiert.

## Revendications

1. Procédé pour mettre à jour un modèle, le procédé comportant de :
collecter, par une unité de mesure (130), une donnée de capteur d'inférence indiquant une grandeur physique mesurée d'un composant d'un appareil à turbine à gaz (100) et mesurée par l'intermédiaire d'un capteur associé à l'appareil à turbine à gaz (100) lorsque l'appareil à turbine à gaz fonctionne ;
déduire, par une unité d'analyse (140), une donnée d'état indiquant si un état du composant est un état normal ou un état anormal en analysant la donnée de capteur d'inférence par l'intermédiaire d'un modèle d'ordre réduit généré en utilisant des premières données d'apprentissage déduites par analyse numérique ;
déduire, par une unité de vérification (160), un vecteur d'état indiquant l'état du composant comme une probabilité en réalisant une inférence sur la donnée de capteur d'inférence par l'intermédiaire d'un modèle de vérification généré en utilisant des secondes données d'apprentissage ;
mettre à jour, par l'unité de vérification (160), les premières données d'apprentissage en utilisant le vecteur d'état correspondant à la donnée de capteur d'inférence lorsque la donnée d'état est différente du vecteur d'état ;
mettre à jour, par une unité de génération de modèle physique (110), le modèle d'ordre réduit en utilisant les premières données d'apprentissage mises à jour ; et
commander, par une unité d'expression (150), l'appareil à turbine à gaz sur la base du modèle d'ordre réduit mis à jour.

2. Procédé selon la revendication 1, comportant en outre de :
générer, par l'unité de génération de modèle physique (110), le modèle d'ordre réduit, qui déduit la donnée d'état en analysant la donnée de capteur d'inférence, en utilisant les premières données d'apprentissage déduites par l'analyse numérique avant la collecte de la donnée de capteur d'inférence.

3. Procédé selon la revendication 2, dans lequel la génération du modèle d'ordre réduit comporte de :
générer (S110), par l'unité de génération de modèle physique (110), un composant virtuel qui simule le composant par une modélisation tridimensionnelle ;
déduire (S120), par l'unité de génération de modèle physique (110), des premières données de capteur indiquant la grandeur physique mesurée du composant virtuel pour chaque condition de fonctionnement d'une pluralité de conditions de fonctionnement de l'appareil à turbine à gaz par l'analyse numérique ;
déduire (S130), par l'unité de génération de modèle physique (110), la donnée d'état indiquant l'état du composant pour chaque condition de fonctionnement de la pluralité de conditions de fonctionnement par l'analyse numérique ;
construire (S140), par l'unité de génération de modèle physique (110), les premières données d'apprentissage en mettant en correspondance les premières données de capteur et la donnée d'état pour chaque condition de fonctionnement de la pluralité de conditions de fonctionnement ; et
générer (S150), par l'unité de génération de modèle physique (110), le modèle d'ordre réduit sur la base des premières données d'apprentissage.

4. Procédé selon l'une quelconque des revendications précédentes, comportant en outre de :
générer, par une unité de génération de modèle d'apprentissage (120), le modèle de vérification, qui déduit le vecteur d'état à partir de la donnée de capteur d'inférence, en utilisant les secondes données d'apprentissage obtenues lorsque l'appareil à turbine à gaz fonctionne, avant la collecte de la donnée de capteur d'inférence.

5. Procédé selon la revendication 4, dans lequel la génération du modèle de vérification comporte de :
préparer, par l'unité de génération de modèle d'apprentissage (120), les secondes données d'apprentissage qui incluent les secondes données de capteur indiquant la grandeur physique mesurée du composant mesuré par l'intermédiaire du capteur lorsque l'appareil à turbine à gaz fonctionne et une étiquette indiquant l'état du composant correspondant aux secondes données de capteur ;
entrer, par l'unité de génération de modèle d'apprentissage (120), les secondes données de capteur dans le modèle de vérification ;
déduire, par le modèle de vérification, le vecteur d'état en réalisant une inférence sur les secondes données de capteur ;
calculer, par l'unité de génération de modèle d'apprentissage (120), une perte indiquant une différence entre le vecteur d'état et l'étiquette ; et
réaliser, par l'unité de génération de modèle d'apprentissage (120), une optimisation qui met à jour des paramètres du modèle de vérification en minimisant la perte.

6. Procédé selon la revendication 5, dans lequel l'étiquette est un vecteur indiquant si l'état du composant est l'état normal ou l'état anormal, et le vecteur d'état indique la probabilité correspondant à chaque état parmi l'état normal et l'état anormal.

7. Procédé selon la revendication 5 ou 6, dans lequel la préparation des données d'apprentissage comporte de :
collecter en continu, par l'unité de génération de modèle d'apprentissage, une condition de fonctionnement, les secondes données de capteur et une sortie de l'appareil à turbine à gaz lorsque l'appareil à turbine à gaz fonctionne réellement ; et
attribuer, par l'unité de génération de modèle d'apprentissage, l'étiquette de l'état normal lorsque la sortie de l'appareil à turbine à gaz est dans les limites d'une plage prédéterminée par rapport à une valeur de sortie standard prédéterminée de l'appareil à turbine à gaz en réponse à la condition de fonctionnement et aux secondes données de capteur, et attribuer l'étiquette de l'état anormal lorsque la sortie de l'appareil à turbine à gaz s'écarte de la valeur de sortie standard prédéterminée de plus de la plage prédéterminée.

8. Procédé selon l'une quelconque des revendications précédentes, comportant en outre de :
visualiser, par l'unité d'expression (150), la grandeur physique mesurée du composant et l'état du composant, et afficher la grandeur physique mesurée visualisée du composant et l'état visualisé du composant sur un écran avant la déduction du vecteur d'état et après la déduction de la donnée d'état.

9. Procédé selon l'une quelconque des revendications précédentes, dans lequel la déduction de la donnée d'état comporte de :
déduire, par le modèle d'ordre réduit, une grandeur physique analysée du composant à partir de la donnée de capteur d'inférence indiquant la grandeur physique mesurée du composant ; et
déduire, par le modèle d'ordre réduit, la donnée d'état indiquant si l'état du composant est l'état normal ou l'état anormal à partir de la grandeur physique analysée du composant.

10. Procédé selon l'une quelconque des revendications précédentes, dans lequel la déduction du vecteur d'état comporte de :
entrer, par l'unité de vérification (160), la donnée de capteur d'inférence dans le modèle de vérification ; et
déduire, par le modèle de vérification, le vecteur d'état indiquant la probabilité que le composant soit dans l'état normal et la probabilité que le composant soit dans l'état anormal en effectuant une pluralité d'opérations, y compris l'application d'un poids entraîné entre deux couches d'une pluralité de couches du modèle de vérification.

11. Appareil pour mettre à jour un modèle, l'appareil comportant :
une unité de mesure (130) configurée collecter pour une donnée de capteur d'inférence indiquant une grandeur physique mesurée d'un composant d'un appareil à turbine à gaz et mesurée par l'intermédiaire d'un capteur associé à l'appareil à turbine à gaz lorsque l'appareil à turbine à gaz fonctionne ;
une unité d'analyse (140) configurée pour déduire une donnée d'état indiquant si un état du composant est un état normal ou un état anormal en analysant la donnée de capteur d'inférence par l'intermédiaire d'un modèle d'ordre réduit généré en utilisant des premières données d'apprentissage déduites par analyse numérique ;
une unité de vérification (160) configurée pour déduire un vecteur d'état indiquant l'état du composant comme une probabilité en réalisant une inférence sur la donnée de capteur d'inférence par l'intermédiaire d'un modèle de vérification généré en utilisant des secondes données d'apprentissage, et pour mettre à jour les premières données d'apprentissage en utilisant le vecteur d'état correspondant à la donnée de capteur d'inférence lorsque la donnée d'état est différente du vecteur d'état ;
une unité de génération de modèle physique (110) configurée pour mettre à jour le modèle d'ordre réduit en utilisant les premières données d'apprentissage mises à jour ; et
une unité d'expression (150) configurée pour commander l'appareil à turbine à gaz sur la base du modèle d'ordre réduit mis à jour.

12. Appareil selon la revendication 11, dans lequel l'unité de génération de modèle physique (110) est configurée pour générer le modèle d'ordre réduit, qui déduit la donnée d'état en analysant la donnée de capteur d'inférence, en utilisant les premières données d'apprentissage déduites par l'analyse numérique.

13. Appareil selon la revendication 12, dans lequel l'unité de génération de modèle physique (110) est configurée pour :
générer un composant virtuel qui simule le composant par une modélisation tridimensionnelle,
déduire des premières données de capteur indiquant la grandeur physique mesurée du composant virtuel pour chaque condition de fonctionnement d'une pluralité de conditions de fonctionnement de l'appareil à turbine à gaz par l'analyse numérique,
déduire la donnée d'état indiquant l'état du composant pour chaque condition de fonctionnement de la pluralité de conditions de fonctionnement par l'analyse numérique,
construire les premières données d'apprentissage en mettant en correspondance les premières données de capteur et la donnée d'état pour chaque condition de fonctionnement de la pluralité de conditions de fonctionnement, et
générer le modèle d'ordre réduit sur la base des premières données d'apprentissage.

14. Appareil selon l'une quelconque des revendications 11 à 13, comportant en outre :
une unité de génération de modèle d'apprentissage configurée pour générer le modèle de vérification, qui déduit le vecteur d'état à partir de la donnée de capteur d'inférence, en utilisant les secondes données d'apprentissage obtenues lorsque l'appareil à turbine à gaz fonctionne.

15. Appareil selon la revendication 14, dans lequel l'unité de génération de modèle d'apprentissage est configurée pour :
préparer les secondes données d'apprentissage qui incluent les secondes données de capteur indiquant la grandeur physique mesurée du composant mesuré par l'intermédiaire du capteur lorsque l'appareil à turbine à gaz fonctionne et une étiquette indiquant l'état du composant correspondant aux secondes données de capteur ;
entrer les secondes données de capteur dans le modèle de vérification,
calculer une perte indiquant une différence entre le vecteur d'état et l'étiquette lorsque le modèle de vérification déduit le vecteur d'état en réalisant une inférence sur les secondes données de capteur, et
effectuer une optimisation qui met à jour des paramètres du modèle de vérification en minimisant la perte.
